# EUROPEAN PATENT APPLICATION

(11) **EP 3 838 449 A1**
(43) Date of publication of application: **23.06.2021**
(21) Application number: 20776364.0
(22) Date of filing: 27.03.2020
(51) Int. Cl.: B22F 7/00

(54) **AUTOMATIC POSITIONING AND PROCESSING SYSTEM FOR THREE-DIMENSIONAL PRINTED PRODUCT**

(30) Priority: 27.03.2019 HK 19121556
(71) Applicant: KOLN HONG KONG LIMITED, Hong Kong (CN)
(72) Inventor: YAU, Wing Fung Edmond, Hong Kong Science Park, Shatin, NT. Hong Kong (CN); MAK, Sze Yi, Hong Kong Science Park, Shatin, NT. Hong Kong (CN)
(74) Representative: Loo, Chi Ching
(86) International application number: PCT/IB2020/052896
(87) International publication number: WO 2020/194247

(57) **Abstract**

An automatic positioning and processing system for three-dimensional printed product is for the three-dimensionally printed product transferring to a device for subsequent processing procedures quickly, and the corresponding device may quickly process and position the product by a reference point. The positioning comprising positioning device in the X, Y and Z axes so as to complete processing procedures and improve the accuracy of processing. And it is especially applicable for products having irregular shapes, such as artificial bones, human implants and surgical tools. The present invention may be helpful in mechanical automatic positioning so as to complete the processing of high-precision biological printed products.

## Description

### FIELD OF THE INVENTION

The invention involves the technical field of manufacture of medical appliances, in particular a positioning processing system that facilitates the manufacture of medical appliances using three-dimensional printing technology.

### BACKGROUND OF THE INVENTION

To complete three-dimensional printed metal products, follow-up processing procedures are required, including support removal, grinding, grinding and polishing, etc., to meet the requirements of use. However, these subsequent processing procedures are generally not installed on the 3D printing equipment at the same time, and the printed products need to be transferred to the corresponding equipment for processing. In order to achieve higher processing accuracy, these subsequent processing equipment need to position the product and also It is to find the reference point for processing. For products with regular shapes, positioning is easier to achieve. But for products with irregular shapes, such as artificial bones, human implants, surgical tools, etc., it is difficult to achieve positioning, which affects the processing accuracy of subsequent processing procedures.

### SUMMARY OF THE INVENTION

In view of the above-mentioned shortcomings of the prior art, the present invention provides an automatic positioning and processing system for three-dimensional printed products, to position and process the products accurately during subsequent processing.

Automatic positioning and processing system for three-dimensional printed product, is provided with a reference point for positioning the product during subsequent processing procedures, which is set on the product or a base for fixing the product; the subsequent processing steps of the three-dimensional printing product are as follow:
a. Install the product or the base with the product is fixed to the processing equipment;
b. The processing equipment performs subsequent processing by positioning the product by the reference point.

Further, the subsequent processing steps include cutting, grinding, grinding and polishing.

Further, the reference point is a reference column formed by three-dimensional printing on the surface of the product or the base.

Further, the reference column is kept after the last step of the subsequent processing, and it is removed in this step.

Further, the reference column is arranged on the convex surface of the product.

Further, the setting position of the reference column is coaxial with the center of gravity of the product.

Further, the cooling medium used in the subsequent processing steps is vaporized carbon dioxide sprayed to the product (1) or the tool at a high speed.

Further, the material of the product is titanium alloy, cobalt-chromium alloy or stainless steel.

Beneficial effects of this invention: When the products completed by three-dimensional printing and are transferred to the equipment for subsequent processing procedures, the corresponding equipment can quickly process and position the product by the reference point, which includes the positioning of the three axes of X, Y, and Z to complete the processing procedure and improve the accuracy of the processing. It is especially suitable for products with irregular shapes, such as artificial bones, human implants, surgical tools, etc., which can help machine automatic positioning to complete the processing of high-precision bio-printed products.

### BRIEF DESCRIPTION OF THE DRAWINGS

Below are explanations of the invention combining with drawings.
FIG. 1 is a schematic diagram of the present invention.
FIG. 2 is a schematic diagram of three different designs of reference columns.

### DESCRIPTION OF THE EMBODIMENTS

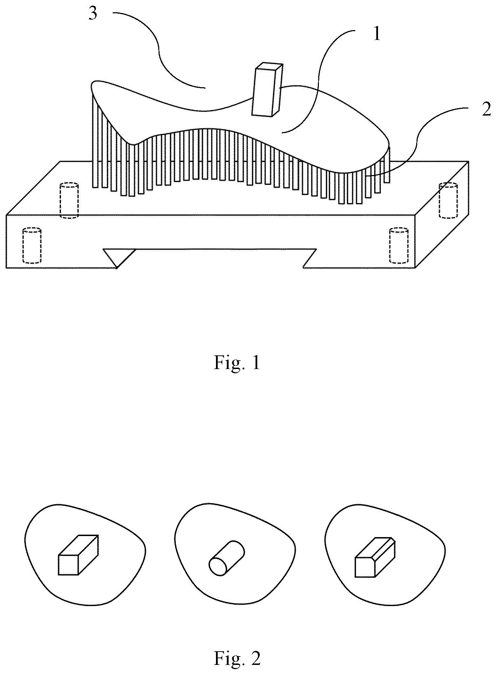

Refer to Fig.1 and Fig.2, the automatic positioning and processing system for three-dimension printed products is provided with the reference point 3 for positioning the product 1 during subsequent processing procedures, which is set on the product or a base for fixing the product. There are two types of reference points 3 for positioning. One is the base 2 for three-dimension printing. The product 1 is installed on the base 2 first, and then the base 2 is installed on the machine of the three-dimension printer. The installation method can be installed with screws or pneumatic valves. The other one is to print one or more reference points 3 on the appropriate position of the product 1. The reference point 3 can be removed later or kept on the product.

After the reference point 3 is set, the subsequent processing steps of the metal 3D printing product 1 are as follow:
a. Install the product 1 or the base 2 on which the product 1 is fixed to the processing equipment;
b. The processing equipment performs subsequent processing by positioning the product by the reference point.

For artificial bones, human implants, surgical tools, etc., the metal materials for processing, such as titanium alloys, cobalt-chromium alloys, and stainless steel, are hard materials. The reference point 3 also uses hard materials, such as metals or high-hardness plastics, which are not easily deformed during use.

The reference point 3 is designed as a recessed or protruding part according to different situation. For example, the reference point 3 of the three-dimensional printing base 2 can be a recessed part, so that the surface of the bottom plate is flat and will not affect the printing process. The reference point 3 on the three-dimensional printed product 1 should be a protruding part, such as a reference column formed by three-dimensional printing on the surface of the product 1 or the base 2, which is removed after processing.

Further, the base 2 is provided with fixing devices to fix the base 2 to the processing equipment, such as screw grooves and trapezoidal grooves. The base 2 can also be equipped with an air bag and an air suction port, and a pneumatic valve vacuum by the air suction port to fix the base 2 to the processing equipment. The reference point 3 of the three-dimensional printed product 1 can be removed or retained on the product 1 during subsequent processing. For example, the support column of product 1 or an external printing reference column can be used as a reference point 3. In order to remove and polish during subsequent processing procedures, the reference column may be set on the convex surface of the product 1. The reference column of the three-dimensional printed product 1 may be a square column, a cylinder, or an asymmetric column. A fixture is installed at the end of the mechanical arm of the equipment in the subsequent processing process to clamp the reference column, and the shape of the fixture matches the reference column. In order to reduce the possibility of deformation of product 1 caused by external force applied to product 1 during processing, the reference column is coaxial with the center of gravity of product 1. If product 1 is with relatively extreme length-to-width ratio or irregular appearance, more than one reference column to achieve positioning is required.

During subsequent processing procedures, the equipment is equipped with two sets of manipulators to fix the base 2 of the product component and the reference column respectively. Another set of manipulator with processing tools process precise manufacturing by the manipulator fixing the reference column as the reference to follow the shape of the product 1. The process can have the following solutions. Scheme 1: the manipulator transfers the product components and the bottom plate from the three-dimension printing equipment to the subsequent processing equipment for precise processing. After completion, the robot transfers the product components and the base 2 from the subsequent processing equipment to the 3D printing equipment to continue the 3D printing operation. Since each equipment and manipulator have positioning devices and reference columns for positioning, the product components do not need to be repositioned after transfer. Scheme 2: If it is not necessary to transfer product components, the manipulator extends from the subsequent processing equipment to the 3D printing equipment to directly process the product components accurately. Scheme 3: scheme 1 and scheme 2 are use together.

The process of removing the reference point/reference column of the base 2: At least two sets of manipulators of the equipment fix the base 2 and reference point/reference column of the product component respectively, and cooperate with another set of manipulators with processing tools to cut out the column from the base 2.

The grinding process of product 1: The manipulator assembles grinding tools, and cooperates with the manipulator of the reference column of product 1, then grind and polish the cut surface and other surfaces of product 1. According to the procedure, polish the printed product into a smooth arc as needed.

If the product component is equipped with multiple reference points or reference columns, alternately remove the reference points or reference columns to meet the precise processing and polishing procedures.

If the finished product of product 1 needs to retain the reference column, the subsequent processing procedure is complete. Otherwise, the last reference column on product 1 needs to be removed. If the reference column blocks the surface of product 1 which needs to be polished, or the reference column needs to be cut and removed, the manipulator can cooperate with a custom fixture to fix the other side of product 1, so that the manipulator can releases the reference column, and finally the reference column is cut and removed by the manipulator equipped with a cutting tool.

The design software of support for three-dimension printing: the design principle is as follows: First, place the product 1 in the ideal position of the three-dimension printer tool in the middle of the processing, and then follow the principle of meeting most of the polished surface. The position of the reference column is based on the least obstructive polished surface. The size of the reference column is designed in proportion to the weight of product 1 and based on the least support for printing and saving printing time.

The grinding of biological products: in current, metal cutting, grinding, polishing and other processing, generally coolant is necessary to cool down the product 1 or tool, but for biological products, the coolant may pollute the biological products. So the coolant needs to be replaced for cooling. The present invention uses high-pressure release of the low-temperature carbon dioxide in solid state at room temperature, and high-speed injection of gasified carbon dioxide to the processing part through a nozzle for cooling. The gasified carbon dioxide will not cause any pollution to biological products.

## Claims

1. Automatic positioning and processing system for three-dimensional printed product, whereas is provided with a reference point (3) for positioning the product (1) during subsequent processing procedures, which is set on the product (1) or a base for fixing the product (1); the subsequent processing steps of the three-dimensional printing product (1) are as follow:
a. Install the product (1) or the base (2) with the product (1) is fixed to the processing equipment;
b. The processing equipment performs subsequent processing by positioning the product (1) by the reference point (3).

2. Automatic positioning and processing system for three-dimensional printed product of claim 1, whereas the subsequent processing steps include cutting, grinding, grinding and polishing.

3. Automatic positioning and processing system for three-dimensional printed product of claim 1, whereas the reference point (3) is a reference column formed by three-dimensional printing on the surface of the product (1) or the base (2).

4. Automatic positioning and processing system for three-dimensional printed product of claim 3, whereas the reference column is kept after the last step of the subsequent processing, and it is removed in this step.

5. Automatic positioning and processing system for three-dimensional printed product of claim 3, whereas the reference column is arranged on the convex surface of the product (1).

6. Automatic positioning and processing system for three-dimensional printed product of claim 3 or claim 5, whereas the setting position of the reference column is coaxial with the center of gravity of the product (1).

7. Automatic positioning and processing system for three-dimensional printed product of claim 2, whereas the cooling medium used in the subsequent processing steps is vaporized carbon dioxide sprayed to the product (1) or the tool at a high speed.

8. Automatic positioning and processing system for three-dimensional printed product of claim 2, whereas the material of the product (1) is titanium alloy, cobalt-chromium alloy or stainless steel.
